# EUROPEAN PATENT APPLICATION

(11) **EP 4 300 453 A1**
(43) Date of publication of application: **03.01.2024**
(21) Application number: 23157051.6
(22) Date of filing: 16.02.2023
(51) Int. Cl.: G07G 1/00, G07G 1/01, G06Q 20/20, G06Q 20/38

(54) **CHECKOUT DEVICE AND METHOD**

(30) Priority: 27.06.2022 JP 2022102912
(71) Applicant: Toshiba TEC Kabushiki Kaisha, Tokyo 141-8562 (JP)
(72) Inventor: Suzuki, Yasunobu, Shinagawa-ku, 141-8562 (JP)
(74) Representative: Bandpay & Greuter

(57) **Abstract**

According to an embodiment, a checkout device includes a scanner configured to read encoded information, a card reader configured to read information from a card medium, and a processor. The processor is configured to execute checkout processing for a commodity transaction of a customer, receive customer identification information for identifying the customer, acquire a member type for the customer based on the customer identification information; and cause a display screen to display a different screen during the checkout processing according to the acquired member type.

## Description

### FIELD

Embodiments described herein relate generally to a checkout device and a method for checkout devices and systems.

### BACKGROUND

In a store selling products and services (hereinafter collectively referred to as "commodities" or "items"), a service for granting a privilege to a customer registered as a member has been implemented in order to maintain customer loyalty. For example, for members, points are rewarded a predetermined ratio of a purchase amount.

In recent years, individual companies and stores (hereinafter collectively referred to as "stores") have used different types of member programs (or member systems) so as to be able to provide promotions tailored to characteristics of specific customers (registered members). A member program may use a member cards storing a member ID linked to a customer or a member application program linked to the customer may be loaded on a portable terminal such as a smartphone.

If a store uses different types of member systems, operations at a checkout device may sometimes different for a customer. For example, a coupon may be distributed only to only the application members. Therefore, there occurs a problem in which operation of the checkout device becomes more complicated depending on which member system is appropriate.

To this end, a checkout device, a point-of-sale terminal, a non-transitory, and a computer-readable medium according to appended claims are provided.

### BRIEF DESCRIPTION OF THE DRAWINGS

FIG. 1 is a diagram illustrating an overview of a store system.
FIG. 2 is a block diagram of a POS terminal.
FIG. 3 is a diagram illustrating a data configuration of a commodity master.
FIG. 4 is a diagram illustrating a data configuration of an identification information management table.
FIG. 5 is a diagram illustrating a data configuration of a member type management table.
FIG. 6 is a block diagram illustrating a functional configuration of a control unit.
FIG. 7 is a block diagram of a server device.
FIG. 8 is a diagram illustrating a data configuration of a member master.
FIG. 9 is a diagram illustrating a data configuration of a coupon management file.
FIG. 10 is a block diagram illustrating a functional configuration of a control unit.
FIG. 11 is a flowchart illustrating transaction processing by a control unit.
FIG. 12 is a diagram illustrating a member ID input guidance screen displayed by a display unit.
FIG. 13 is a diagram illustrating a coupon ID input guidance screen displayed by the display unit.
FIG. 14 is a flowchart illustrating member type selection processing by a control unit.

### DETAILED DESCRIPTION

In general, according to one embodiment, a checkout device and a program capable of facilitating operation of an operator are provided.

According to one embodiment, a checkout device includes a scanner configured to read encoded information, a card reader configured to read information from a card medium, and a processor. The processor is configured to execute checkout processing for a commodity transaction of a customer, receive customer identification information for identifying the customer, acquire a member type for the customer based on the customer identification information; and cause a display screen to display a different screen during the checkout processing according to the acquired member type.

A checkout device and a program in certain example embodiment are explained below with reference to the drawings. The present disclosure is not limited to these particular examples. For example, checkout device can be a self-service POS terminal, a POS terminal at which a store clerk performs the operations relating to the commodity registration and the checkout processing, a semi-self-service POS at which the store clerk performs operations relating to the commodity registration at a registration device, a settlement terminal in a semi-self-service POS system at which the customer performs payment operations, or a settlement terminal in a POS system in which the customer operates a smartphone or a tablet terminal to register items then and performs the checkout processing at the settlement terminal.

In an embodiment explained below, differences in membership type relates to a type of a member system the customer uses (e.g., membership card or membership app). However, the member types are not limited to this and may be based on such things a member rank for members within the same member system (e.g., rankings based on accumulated lifetime points or other measures).

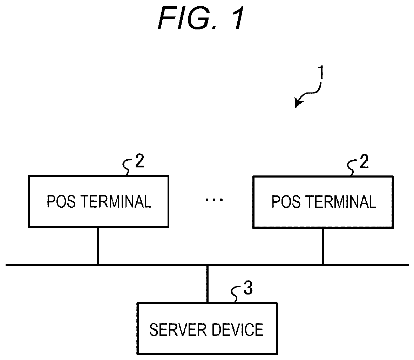

FIG. 1 is a diagram illustrating an overview of a store system 1 in an embodiment. The store system 1 in this embodiment can be applied to, for example, a specialty store that mainly sells commodities in a specific genre such as apparel commodities or a volume retailer such as a supermarket. The store system 1 includes a plurality of POS terminals 2 and a server device 3. The POS terminals 2 and the server device 3 are communicably connected to each other via a network such as a LAN (Local Area Network).

The POS terminal 2 is a self-service POS terminal with which a customer performs operations relating to commodity registration and checkout processing. The POS terminal 2 reads a commodity code of the commodity being purchased by the customer and stores commodity information acquired based on the read commodity code to thereby execute the commodity registration. The POS terminal 2 executes the checkout processing based on information registered by the commodity registration.

The checkout processing is for the customer to perform payment and includes calculation processing, settlement processing, and receipt issuance processing. The calculation processing is, for example, processing for calculating a transaction amount. The settlement processing is processing for completing payment for the transaction amount calculated by the calculation processing. In cash settlement, the settlement processing includes calculation and dispensing of change. In cashless settlement, the settlement processing includes communication with a settlement server. The receipt issuance processing is processing for issuing a paper receipt or an electronic receipt. The POS terminal 2 is an example of a checkout device.

In the checkout processing, the POS terminal 2 displays various screens for guiding an operator. In the checkout processing, the POS terminal 2 can receive a member ID of a customer and then acquire a member type of the customer corresponding to the member ID. That is, the POS terminal 2 determines the type of member system used by the customer. The POS terminal 2 may acquire the member type from the server device 3 based on the received member ID or may acquire the member type from a medium such as a card in which the member ID is stored. The POS terminal 2 differentiates, according to the acquired member type of the customer, a screen for guiding the operator about operation.

The POS terminal 2 transmits, to the server device 3, transaction data of a transaction when the checkout processing is completed. The transaction data includes a transaction date and time, a transaction No., a transaction amount, commodity information about purchased commodities, a member ID of the customer, and a coupon ID of coupon (s) used in the transaction.

The coupon is a medium on which coupon information for the customer to obtain a privilege (benefit) is shown. Examples of a coupon include a paper coupon on which the coupon information is printed and a digital coupon for displaying the coupon information on a terminal of the customer. The coupon ID is information for specifying the coupon. Examples of a privilege obtained by a user with a coupon include a price-cut deducting a fixed amount from a sale price of an item or deducting a fixed percentage amount from the sale price of an item (hereinafter collectively referred to as "price-cut"), free-of charge provision of gifts, goods, or the like, and provision of points having a monetary equivalent value. In this embodiment, it is assumed that the privilege obtained by the user with the coupon is a price-cut.

The server device 3 receives the transaction data settled by the checkout processing from the POS terminal 2 and manages the transaction data. The server device 3 manages, based on the transaction data received from the POS terminal 2, a state of use of coupons issued by the server device 3. The server device 3 updates, as appropriate, a commodity master storing commodity information of commodities sold by the store and transmits the commodity master to the POS terminals 2.

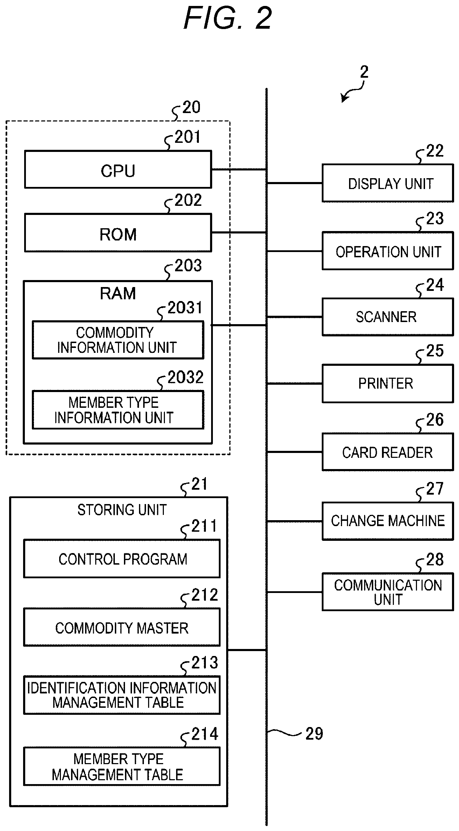

FIG. 2 is a block diagram illustrating a hardware configuration of the POS terminal 2. The POS terminal 2 includes a control unit 20, a storing unit 21, a display unit 22, an operation unit 23, a scanner 24, a printer 25, a card reader 26, a change machine 27, and a communication unit 28. The control unit 20, the storing unit 21, the display unit 22, the operation unit 23, the scanner 24, the printer 25, the card reader 26, the change machine 27, and the communication unit 28 are connected to one another via a bus 29 or the like.

The control unit 20 includes a CPU (Central Processing Unit) 201, a ROM (Read Only Memory) 202, and a RAM (Random Access Memory) 203. The CPU 201, the ROM 202, and the RAM 203 are connected to one another via the bus 29.

The CPU 201 controls the operation of the entire POS terminal 2. The ROM 202 stores various programs such as a program used to drive the CPU 201 along with various data. The RAM 203 is used as a work area of the CPU 201. Various programs and various data stored in the ROM 202 and the storing unit 21 can be loaded in the RAM 203. The CPU 201 operates according to a control program stored in the ROM 202 or the storing unit 21 and then loaded in the RAM 203, whereby the control unit 20 executes various kinds of control processing for the POS terminal 2.

The RAM 203 includes a commodity information unit 2031 and a member type information unit 2032. The commodity information unit 2031 stores commodity information about items purchased by a customer. The commodity information stored by the commodity information unit 2031 is read out from the storing unit 21 based on a commodity code read by the scanner 24 from a code symbol attached to the commodity or otherwise input. The commodity information being stored (registered) by the commodity information unit 2031 is referred to as commodity registration as well.

The member type information unit 2032 stores a member type (member type designation) of a customer when the customer is a member. In this embodiment, information indicating a card member, an application member, or a no-coupon member is stored in the member type information unit 2032. In the following explanation, a card member, an application member, and a no-coupon member are different possible member types .

The card member is a customer who owns a member card in which a member ID is stored. The card member can obtain points corresponding to a purchase amount when purchasing a commodity. The point has a value equivalent to money that can be used in the next and subsequent shopping in the store and is a privilege granted to the card member by the store.

The application member is a customer owning a smartphone in which a member application program is installed. The application member can receive the points explained above as well as receive a digital coupon (hereinafter simply referred to as "coupon"). The no-coupon member in this context is an application member who has either used up all issued coupons, has not received a coupon, or let previously issued coupons become unusable (expire).

The member type stored by the member type information unit 2032 is acquired from the server device 3 based on, for example, a member ID read from a code symbol displayed on a portable terminal of a customer. Alternatively, the member type stored by the member type information unit 2032 is acquired from the server device 3 based on a member ID read from a member card of a customer by the card reader 26 at a transaction start time.

The storing unit 21 can be a storage medium such as a HDD (Hard Disk Drive) or a flash memory and maintains stored content even if the POS terminal 2 is turned off. The storing unit 21 stores a control program 211, a commodity master 212, an identification information management table 213, and a member type management table 214.

The control program 211 can be a program for performing commodity registration based on a commodity code read by the scanner 24, a program for performing checkout processing for a transaction based on information stored by the commodity information unit 2031, a program for controlling display of the display unit 22 based on information stored by the member type information unit 2032, and/or a program for transmitting and receiving various kinds of information to and from the server device 3.

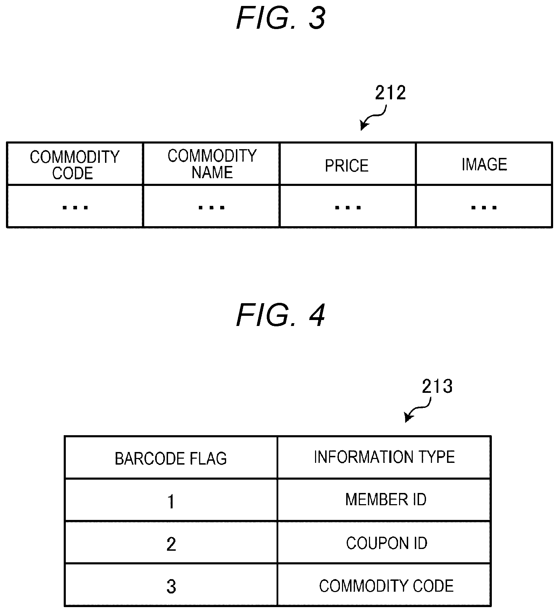

The commodity master 212 is a master file storing commodity information of commodities sold by the store. The commodity master 212 is transmitted from the server device 3 and stored in the storing unit 21. Since commodities dealt in by the store change every day, the commodity master 212 is updated as appropriate. FIG. 3 is a diagram illustrating a data configuration of the commodity master 212. The commodity master 212 stores commodity information in association with a commodity code. The stored commodity information is a commodity name, a price, an image of the item, and the like.

The commodity code is commodity identification information for identifying a commodity (item). The commodity name is a name of the commodity. The price is a price of the commodity. An amount registered in the price may be either a tax inclusive price or a tax exclusive price. The image is image data indicating the exterior appearance the commodity.

The identification information management table 213 is a table for managing a flag set for recognizing what type of barcode a barcode read by the scanner 24 corresponds to. The identification information management table 213 is set according to the store for matching a type of information indicated by the barcode read by the scanner 24. FIG. 4 is a diagram illustrating a data configuration of the identification information management table 213. The identification information management table 213 stores a barcode flag and an information type in association with each other.

The barcode flag is a flag set at the end of various barcodes to be read by the scanner 24. The various barcodes types in this context are a barcode indicating a member ID displayed on a portable terminal(hereinafter referred to as a "member barcode"), a barcode indicating a coupon ID displayed on the portable terminal(hereinafter referred to as a "coupon barcode"), and a barcode attached to a commodity (hereinafter referred to as a "commodity barcode"). A portable terminal showing a member barcode and/or a coupon barcode and a commodity with a commodity barcode are examples of a medium displaying a code symbol. In this example, the ends of all member barcodes have a flag value "1", the ends of all coupon barcodes have a flag value "2", and the ends of all commodity barcodes have a flag value "3". The information type is a type of information corresponding to the barcode.

Consequently, the POS terminal 2 can recognize whether a barcode recognized by the scanner 24 is a barcode indicating a member ID, a barcode indicating a coupon ID, or a barcode indicating a commodity code. Therefore, for example, although the display unit 22 presently shows a screen for guiding an input of a member barcode (in other words, at a time in the process when a member barcode should normally be input), if a commodity barcode or a coupon barcode is recognized, the POS terminal 2 can perform display corresponding to a type of the recognized barcode.

Information registered in the identification information management table 213 is not limited to an illustrated example. In some examples, information concerning a barcode indicating a store clerk ID (store clerk identification information) input when a store clerk intends to operate the POS terminal 2 may also be registered in the identification information management table 213.

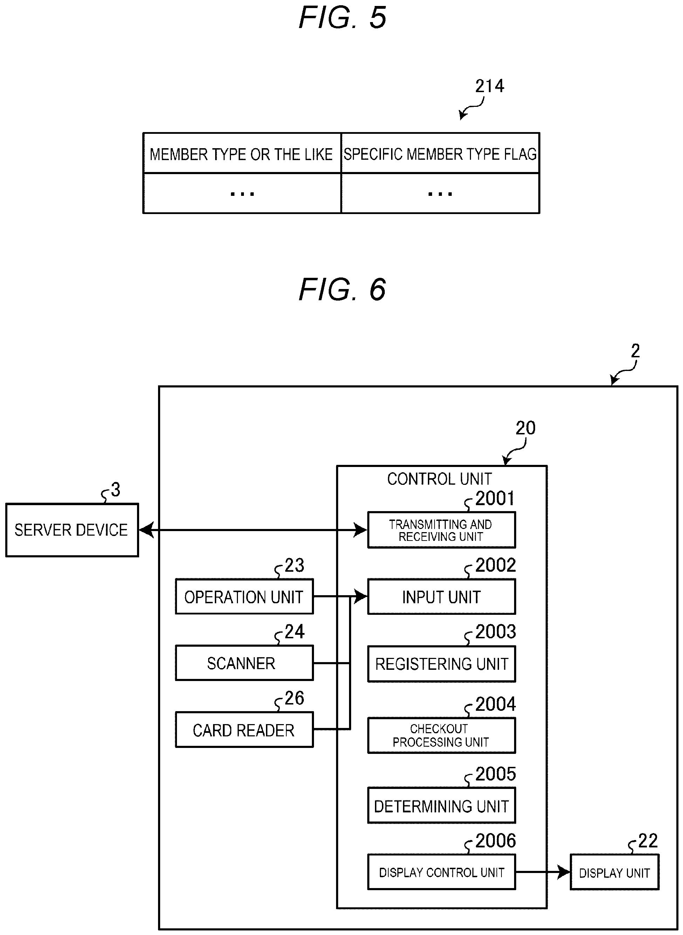

The member type management table 214 is a table for setting a specific member type. The member type management table 214 is set according to the store to indicate which member type the store sets as the specific member type. In this embodiment, an application member who receives a coupon is set as the specific member type. FIG. 5 is a diagram illustrating a data configuration of the member type management table 214. The member type management table 214 stores a member type and a specific member type flag in association with each other.

The member type is, for example, a type of a member system adopted by the store. In this embodiment, the member type can be a card member, an application member, or a no-coupon member. The specific member type flag is information indicating whether the member type corresponding to the specific member type flag is the specific member type. In this embodiment, information indicating that the member type is not the specific member type is registered for the card member and the no-coupon member and information indicating that the member type is the specific member type is registered in the application member. The application member is an example of the specific member type.

The commodity master 212, the identification information management table 213, and the member type management table 214 may be stored not in the storing unit 21 but in an external device such as the server device 3. In this case, by referring to the commodity master 212, the identification information management table 213, and the member identification management table 214 stored in the external device, the POS terminal 2 can execute the same processing as processing executed if the commodity master 212, the identification information management table 213, and the member type management table 214 are stored in the storing unit 21.

Referring back to FIG. 2, the hardware configuration of the POS terminal 2 is explained.

The display unit 22 is a display device and can be a liquid crystal display or the like. The display unit 22 displays various kinds of information under control of the control unit 20. For example, the display unit 22 displays commodity information of a registered commodity, a transaction amount (a total amount of one transaction), and the like. The display unit 22 displays a guidance screen for guiding the operator about inputs of various kinds of information.

The operation unit 23 is an input device and can be a touch panel provided on the surface of the display unit 22, a keyboard provided separately from the display unit 22, or the like. The operation unit 23 inputs, to the control unit 20, various kinds of information input by the operator. For example, the operation unit 23 inputs, to the control unit 20, a transaction start input for instructing a start of checkout processing.

The scanner 24 reads information from various code symbols shown on a medium. For example, the scanner 24 reads a commodity code from a commodity barcode attached to a commodity or the like. The scanner 24 reads a member ID from a member barcode displayed on a portable terminal of the application member. Further, the scanner 24 reads a coupon ID from a coupon barcode displayed on the portable terminal of the application member. The scanner 24 may be a scanner fixedly provided in the POS terminal 2 or may be a handy-type scanner that the operator can take in the operator's hand and operate.

The printer 25 prints and dispenses a receipt relating to a transaction under the control of the control unit 20. The printer 25 prints transaction information including a transaction amount and various messages on the receipt. The printer 25 may print a member type on the receipt.

The card reader 26 reads information from various cards. For example, the card reader 26 reads customer information necessary for credit card settlement from a credit card of a customer. The card reader 26 reads a member ID from a member card owned by a card member. The card reader 26 may be a magnetic card reader that reads information from a magnetic card or may be an IC card reader that reads information from a card incorporating an IC chip.

If a customer pays a purchase price by cash, the change machine 27 receives bills and coins paid by the customer and dispenses change according to necessity.

The communication unit 28 is an interface for communicating with the external device such as the server device 3. The control unit 20 becomes capable of transmitting and receiving information (data) to and from the external device by being connected to the external device via the communication unit 28.

FIG. 6 is a block diagram illustrating a functional configuration of the control unit 20 of the POS terminal 2. The CPU 201 operates according to a control program stored in the ROM 202 or the storing unit 21, whereby the control unit 20 functions as a transmitting and receiving unit 2001, an input unit 2002, a registering unit 2003, a checkout processing unit 2004, a determining unit 2005, and a display control unit 2006. These functions may be configured using hardware such as a dedicated circuit.

The transmitting and receiving unit 2001 transmits and receives various kinds of information to and from an external device such as the server device 3. For example, the transmitting and receiving unit 2001 transmits, to the server device 3, the member ID input via the input unit 2002. The transmitting and receiving unit 2001 receives, from the server device 3, a member type for the member identified by the transmitted member ID. The transmitting and receiving unit 2001 functions as an acquiring unit that acquires a member type of a customer corresponding to the customer identification information input via the input unit 2002.

In some examples, the transmitting and receiving unit 2001 may receive just the member type, in other words, receive only information indicating an application member or a card member. In this case, the server device 3 does not need to determine whether the application member owns a coupon and transmitting and receiving unit 2001 can receive information indicating a privilege of a coupon as specified by a coupon ID input to the input unit 2002. For example, the transmitting and receiving unit 2001 receives a price-cut amount as the information indicating the privilege of a coupon.

Customer identification information for a customer can be input via the input unit 2002. A member ID of an application member can be input to the input unit 2002 from the scanner 24. A coupon ID and a commodity code can also be input to the input unit 2002 from the scanner 24. A member ID of a card member can be input to the input unit 2002 from the card reader 26. A transaction start input for instructing a start of checkout processing can be input to the input unit 2002 via the operation unit 23. A barcode flag can also be input to the input unit 2002 from the scanner 24.

The registering unit 2003 executes commodity registration. Specifically, the registering unit 2003 reads out commodity information corresponding to a commodity code from the commodity master 212 and registers (stores) the commodity information in the commodity information unit 2031. The registering unit 2003 also registers the member type received from the server device 3 in the member type information unit 2032.

The checkout processing unit 2004 executes checkout processing relating to a transaction of commodities. Specifically, the checkout processing unit 2004 calculates a transaction amount (transaction total) based on information stored in the commodity information unit 2031. The checkout processing unit 2004 executes settlement processing for completing payment of the calculated transaction amount. If the customer performs payment by cash settlement, the checkout processing unit 2004 deducts the transaction amount from an amount deposited to the change machine 27 to calculate change due and causes the change machine 27 to pay out the calculated change. If the customer performs payment by cashless settlement, the checkout processing unit 2004 communicates with the settlement server via the transmitting and receiving unit 2001. When the settlement of the transaction is completed, the checkout processing unit 2004 controls the printer 25 to dispense a receipt.

The determining unit 2005 determines whether the member type received by the transmitting and receiving unit 2001 matches the specific member type. Specifically, the determining unit 2005 refers to the member type management table 214 and determines whether information indicating the specific member type is registered in a specific member type flag corresponding to the member type received by the transmitting and receiving unit 2001.

The determining unit 2005 determines, based on the barcode flag input to the input unit 2002, what kind of information a barcode recognized by the scanner 24 indicates. Specifically, the determining unit 2005 refers to the identification information management table 213 and extracts an information type corresponding to the barcode flag.

The display control unit 2006 causes the display unit 22 to display various kinds of information. For example, the display control unit 2006 causes the display unit 22 to display the commodity information of the registered commodity, the transaction amount, and the like. The display control unit 2006 causes the display unit 22 to display a guidance screen for guiding the operator about the input of the various kinds of information.

The display control unit 2006 causes the display unit 22 to display a different screen according to the member type received by the transmitting and receiving unit 2001. For example, if the member type received by the transmitting and receiving unit 2001 is the application member, the display control unit 2006 causes the display unit 22 to display a screen for guiding an input of a coupon ID. If the member type received by the transmitting and receiving unit 2001 is the card member or the no-coupon member, the display control unit 2006 causes the display unit 22 to display a payment method selection screen or the like without causing the display unit 22 to display the screen for guiding an input of a coupon ID.

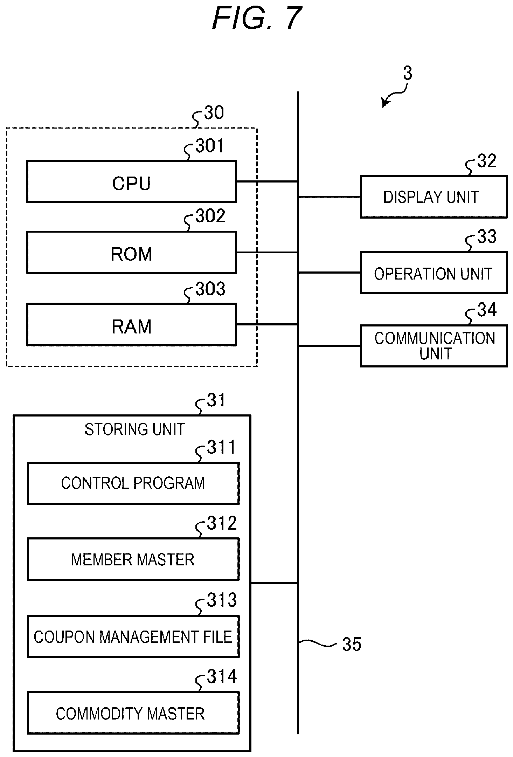

FIG. 7 is a block diagram illustrating a hardware configuration of the server device 3. The server device 3 includes a control unit 30, a storing unit 31, a display unit 32, an operation unit 33, and a communication unit 34. The control unit 30, the storing unit 31, the display unit 32, the operation unit 33, and the communication unit 34 are connected to one another via a bus 35.

The control unit 30 includes a CPU 301, a ROM 302, and a RAM 303. The CPU 301, the ROM 302, and the RAM 303 are connected to one another via the bus 35.

The CPU 301 controls the operation of the entire server device 3. The ROM 302 stores various programs such as a program used to drive the CPU 301 and various data. The RAM 303 is used as a work area of the CPU 301. Various programs and various data stored in the ROM 302 and the storing unit 31 are loaded in the RAM 303. The CPU 301 operates according to a control program stored in the storing unit 31 and loaded in the RAM 303, whereby the control unit 30 executes various kinds of control processing for the server device 3.

The storing unit 31 can be a storage medium such as a HDD or a flash memory that maintains stored content even if the server device 3 is turned off. The storing unit 31 stores a control program 311, a member master 312, a coupon management file 313, and a commodity master 314.

The control program 311 is, for example, a program for acquiring transaction data from the POS terminal 2, a program for managing a state of use of a coupon based on the acquired transaction data, and a program for selecting a member type corresponding to a member ID and transmitting the selected member type to the POS terminal 2.

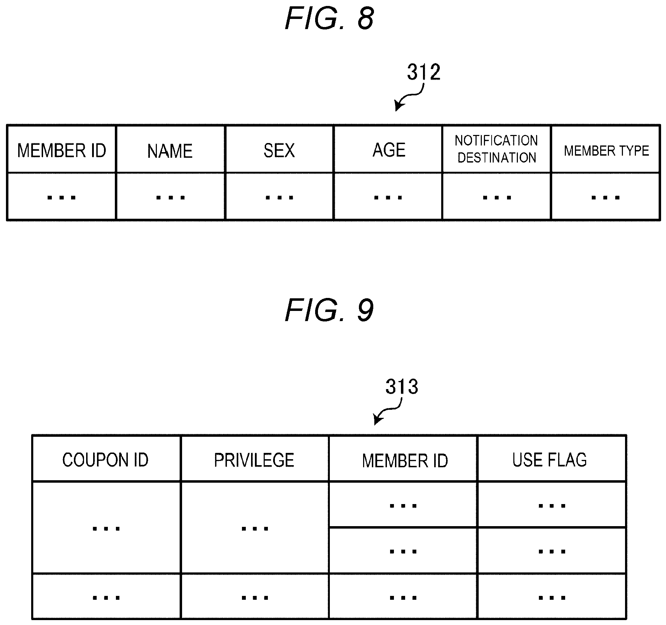

The member master 312 is a master file storing information concerning store members, that is, information concerning customers who have registered with the store or a loyalty/points program associated with the store. FIG. 8 is a diagram illustrating a data configuration of the member master 312. The member master 312 stores a name, sex, age, a notification destination, and a member type in association with a member ID. The notification destination is, for example, an electronic mail address of a portable terminal owned by a member. The member type is information indicating whether the customer is a card member or an application member.

The coupon management file 313 is a file for managing information concerning a coupon issued to an application member. The coupon management file 313 is updated based on coupon information included in transaction data received from the POS terminal 2. The coupon information is information indicating that a coupon has been used. FIG. 9 is a diagram illustrating a data configuration of the coupon management file 313. The coupon management file 313 stores a privilege, a member ID, and a use flag in association with a coupon ID.

The coupon ID is coupon identification information for identifying an issued coupon. The privilege is information indicating a privilege (benefit) associated the coupon. In this embodiment, a price-cut amount is stored as the privilege. The price-cut amount is an amount deducted from a transaction amount when the coupon is used.

In the member ID column, a member ID of an application member to whom the coupon of a particular coupon ID has been issued is registered. Since the store usually simultaneously distributes a coupon to many application members, a plurality of member IDs can be registered for each coupon ID. The use flag is information indicating whether the coupon has been used by a particular member ID. That is, a use flag is registered to correspond to each member ID in a one-to-one relation.

Referring back to FIG. 7, the hardware configuration of the server device 3 is explained.

The display unit 32 can be a liquid crystal panel and displays various kinds of information. The display unit 32 displays, according to necessity, information stored in the member master 312, the coupon management file 313, and the commodity master 314.

The operation unit 33 for inputting information to the control unit 30 and can be a keyboard, a touch panel, a mouse, or the like.

The communication unit 34 is an interface for communicating with an external device such as the POS terminal 2. The control unit 30 is connected to the external device via the communication unit 34 to be capable of transmitting and receiving information (data) to and from the external device.

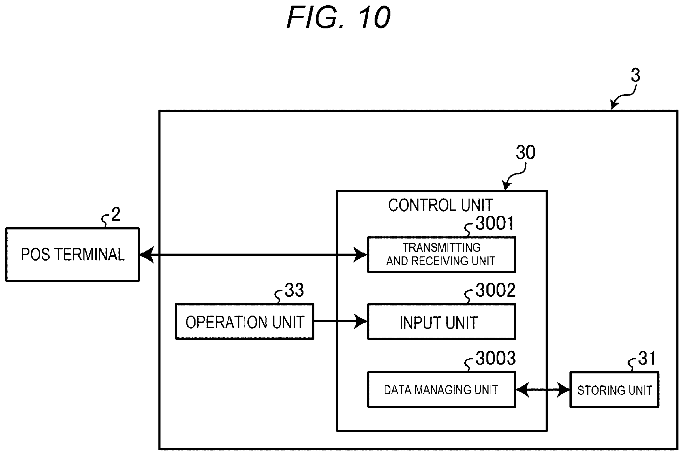

FIG. 10 is a block diagram illustrating a functional configuration of the control unit 30 of the server device 3. The CPU 301 operates according to a control program stored in the ROM 302 or the storing unit 31, whereby the control unit 30 functions as a transmitting and receiving unit 3001, an input unit 3002, and a data managing unit 3003. These functions may be implemented by hardware such as a dedicated circuit in some embodiments.

The transmitting and receiving unit 3001 transmits and receives various kinds of information to and from the POS terminal 2. For example, the transmitting and receiving unit 3001 receives a member ID of a member, who performs a transaction, from the POS terminal 2 and transmits a member type of the member identified by the member ID to the POS terminal 2. At this time, the transmitting and receiving unit 3001 also transmits, to the POS terminal 2, coupon information of a coupon owned by the member having the member ID received from the POS terminal 2. The transmitted coupon information includes a coupon ID and a privilege. The transmitting and receiving unit 3001 receives transaction data from the POS terminal 2 when the transaction ends.

Various kinds of information are input to the input unit 3002 from the operation unit 33. For example, if the member master 312, the coupon management file 313, and the commodity master 314 are manually updated, information to be updated is input to the input unit 3002.

The data managing unit 3003 registers and updates various data stored in the storing unit 31. The data managing unit 3003 reads out, according to necessity, information stored in the storing unit 31. For example, if the transmitting and receiving unit 3001 receives transaction data from the POS terminal 2, the data managing unit 3003 updates the coupon management file 313 based on the transaction data. If the transmitting and receiving unit 3001 receives a member ID from the POS terminal 2, the data managing unit 3003 extracts a member type corresponding to the member ID from the member master 312. If the member type of the member ID received by the transmitting and receiving unit 2001 is the application member, the data managing unit 3003 refers to the coupon management file 313 and reads out coupon information of an unused coupon corresponding to the member ID.

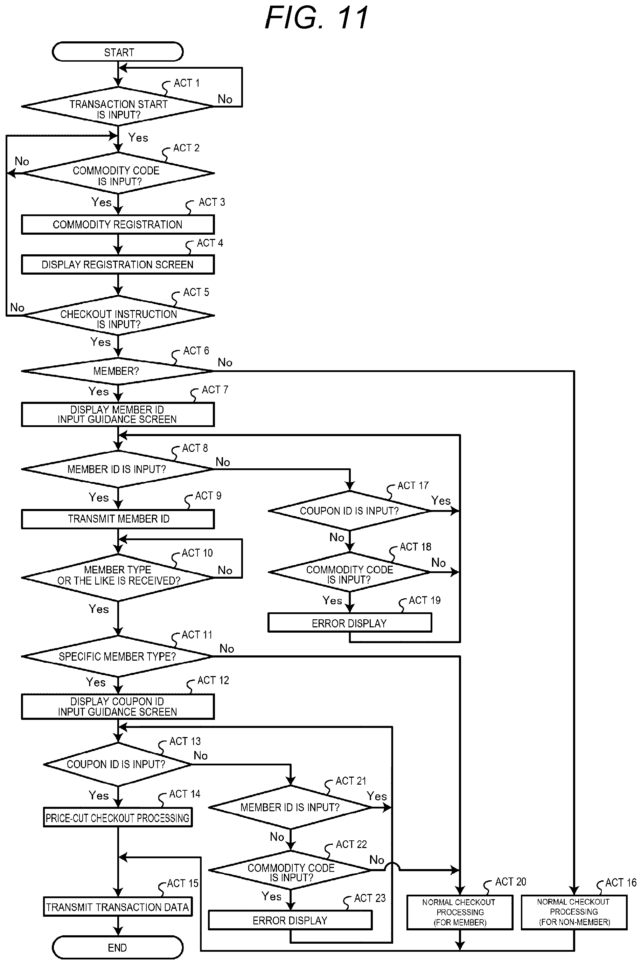

Transaction processing executed by the POS terminal 2 at a transaction time in the store system 1 having the configuration explained above is explained. FIG. 11 is a flowchart illustrating transaction processing by the control unit 20 of the POS terminal 2.

The control unit 20 determines whether a transaction start has been input to the input unit 2002 (Act 1). If the transaction start has not been input (N in Act 1), the control unit 20 returns to the processing in Act 1 and stays on standby.

After the transaction start is input to the input unit 2002 (Y in Act 1), the control unit 20 next determines whether a commodity code is input to the input unit 2002 (Act 2). If a commodity code has not been input (N in Act 2), the control unit 20 returns to the processing in Act 2 and stays on standby.

If a commodity code has been input to the input unit 2002 (Y in Act 2), the registering unit 2003 executes commodity registration (Act 3). Specifically, the registering unit 2003 reads out, from the commodity master 212, commodity information corresponding to the commodity code and stores the commodity information in the commodity information unit 2031.

The display control unit 2006 causes the display unit 22 to display a registration screen (Act 4). The registration screen displays commodity information such as a commodity name, a price, and an image of the registered commodity and displays guidance. The displayed guidance is guidance informing that when reading of commodity barcodes has been completed for all commodities to be purchased that the operator should input a checkout instruction.

Subsequently, the control unit 20 determines whether a checkout instruction has been input to the input unit 2002 (Act 5). If the checkout instruction is not input (N in Act 5), the control unit 20 returns to the processing in Act 2. If the checkout instruction is input to the input unit 2002 (Y in Act 5), the control unit 20 next determines whether a member input has been performed on the input unit 2002 (Act 6). At this time, the display control unit 2006 causes the display unit 22 to display a message "Do you have a point card?" or the like, a YES button, and a NO button, and the like. If the YES button is pressed (selected), the control unit 20 determines that the member input is to be performed. If the NO button is pressed (selected), the control unit 20 determines that the member input is not to be performed.

When the member input is to be performed on the input unit 2002 (Y in Act 6), the display control unit 2006 causes the display unit 22 to display a member ID input guidance screen (Act 7). The member ID input guidance screen is an example of a screen for guiding an input of customer identification information.

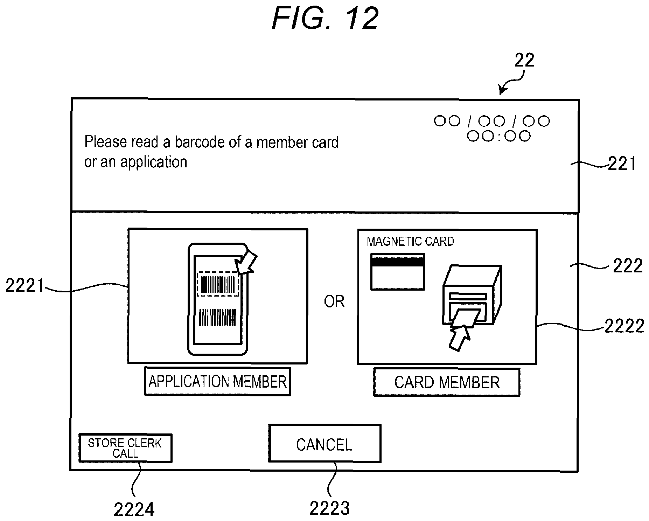

The member ID input guidance screen displayed by the display unit 22 is explained. FIG. 12 is a diagram illustrating the member ID input guidance screen displayed by the display unit 22. The member ID input guidance screen includes a message display region 221 and a guidance display region 222.

A date and time and a message are displayed in the message display region 221. The date and time indicates the current year, month, and day and time. The message is a message for inquiring whether a customer is the application member or the card member, for example, a message such as "Please read a barcode of a member card or an application".

The guidance display region 222 includes an application member guidance section 2221, a card member guidance section 2222, a cancel button 2223, and a store clerk call button 2224.

The application member guidance section 2221 displays operation guidance to an application member. The application member guidance section 2221 performs display for surrounding, among a plurality of barcodes displayed on a portable terminal of the customer according to the member application program, a member barcode with a red frame and designating the member barcode with a red arrow. Consequently, the customer can recognize that the customer only has to scan the designated member barcode with the scanner 24.

In the member application program in this embodiment, a member barcode is displayed in an upper part and a coupon barcode is displayed in a lower part of a display unit of the portable terminal of the customer. Consequently, the customer can cause, with one operation, the display unit of the portable terminal to display a member barcode and a coupon barcode that can be scanned by the scanner 24 in transaction processing. On the other hand, at timing when the member barcode is read, the POS terminal 2 displays operation guidance for causing the customer to scan the member barcode. With the display of the barcode on the portable terminal and the display of the guidance on the POS terminal 2, it is possible to improve operability of the customer in scanning the member barcode with the scanner 24.

The card member guidance section 2222 displays operation guidance to a card member. The card member guidance section 2222 performs display for guiding insertion of a member card into the card reader 26. Consequently, the customer can recognize the need to insert the member card into the card reader 26.

The cancel button 2223 is for cancelling an input of a member ID. If a customer, who is not a member, attempts a member input by mistake, the customer can cancel an input of a member ID by operating the cancel button 2223. The store clerk call button 2224 is an operation piece for calling a store clerk. The customer can operate the store clerk call button 2224 and call a store clerk if the customer cannot understand operation of the POS terminal 2 or if a trouble occurs in the POS terminal 2.

Referring back to FIG. 11, the transaction processing is explained. The customer causes the scanner 24 or the card reader 26 to read a member ID by operating the scanner 24 or the card reader 26 according to the operation guidance on the member ID input guidance screen illustrated in FIG. 12. The determining unit 2005 determines whether a member ID is input to the input unit 2002 from the scanner 24 or the card reader 26 (Act 8).

If a member ID is input to the input unit 2002 (Y in Act 8), the transmitting and receiving unit 2001 transmits the member ID to the server device 3 (Act 9). Subsequently, the control unit 20 determines whether the transmitting and receiving unit 2001 has received a member type from the server device 3 (Act 10) and, if the transmitting and receiving unit 2001 does not receive a member type, returns to the processing in Act 10 and stays on standby.

When the transmitting and receiving unit 2001 receives a member type (Y in Act 10), the determining unit 2005 determines whether the received member type is a specific member type (Act 11). That is, the determining unit 2005 determines whether the received member type indicates that the customer is an application member who owns a coupon.

If the member type is the specific member type (Y in Act 11), the display control unit 2006 causes the display unit 22 to display a coupon ID input guidance screen (Act 12). The coupon ID input guidance screen is an example of a screen for guiding an input of coupon identification information for identifying a coupon.

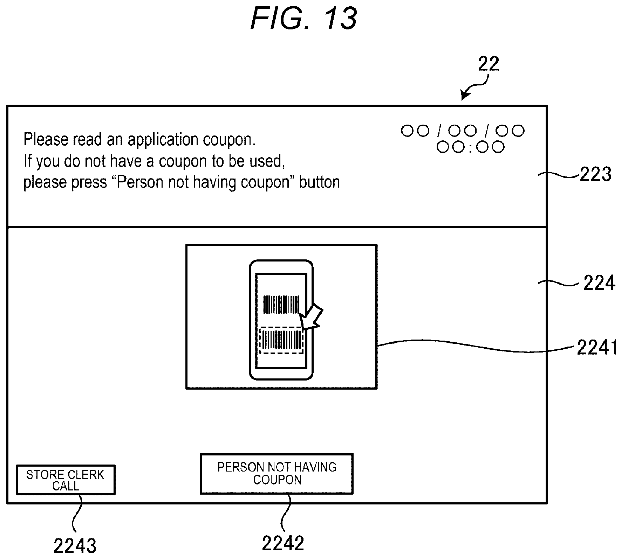

The coupon ID input guidance screen displayed by the display unit 22 is explained. FIG. 13 is a diagram illustrating the coupon ID guidance screen displayed by the display unit 22. The coupon ID input guidance screen includes a message display region 223 and a guidance display region 224.

A date and time and a message are displayed in the message display region 223. The date and time indicates the current year, month, and day and time. The message is a message for urging the customer to read a coupon ID, for example, a message such as "Please read an application coupon. If you do not have a coupon to be used, please press 'Person not having coupon' button."

The guidance display region 224 includes a guidance section 2241, a "Person not having coupon" button 2242, and a store clerk call button 2243.

The guidance unit 2241 displays operation guidance for guiding a coupon barcode to be scanned. The guidance section 2241 performs display for surrounding, among the plurality of barcodes displayed on the portable terminal of the customer according to the member application program, a coupon barcode with a red frame and designating the coupon barcode with a red arrow. Consequently, the customer can recognize that the customer only has to scan the designated coupon barcode with the scanner 24.

The "Person not having coupon" button 2242 is an operation piece operated if a coupon is not being used. If the customer does not intend to use an owned coupon, the customer operates the "Person not having coupon" button 2242.

The POS terminal 2 in this embodiment is configured to not display the coupon ID input guidance screen if the member type of the customer is a no-coupon member, that is, if the customer who may be a coupon member at some point but does not presently own a coupon at the present time. However, in some examples, the POS terminal 2 may still display the coupon ID input guidance screen. In this case, since the no-coupon member does not own a usable coupon, the no-coupon member operates the "Person not having coupon" button 2242 according to the message displayed in the message display region 223. However, according to this present embodiment, there is an advantage that it is possible to simplify operations for the no-coupon member by not displaying the coupon ID input screen to the no-coupon members.

The store clerk call button 2243 is for calling a store clerk. The customer can operate the store clerk call button 2243 and call a store clerk if the customer cannot understand operation of the POS terminal 2 or if a trouble occurs in the POS terminal 2.

Referring back to FIG. 11, the transaction processing is explained. The customer causes the scanner 24 to read a coupon ID by operating the scanner 24 according to the operation guidance on the coupon ID input guidance screen illustrated in FIG. 13. The determining unit 2005 determines whether a coupon ID is input to the input unit 2002 from the scanner 24 (Act 13).

If a coupon ID is input to the input unit 2002 (Y in Act 13), the checkout processing unit 2004 executes price-cut checkout processing based on coupon information received by the transmitting and receiving unit 2001 from the server device 3 (Act 14). The price-cut checkout processing is checkout processing for performing a price-cut from a transaction amount based on a privilege of a coupon and/or granting points to a customer. Subsequently, the transmitting and receiving unit 2001 transmits, to the server device 3, transaction data of a transaction for which settlement has been completed (Act 15). The control unit 20 ends the transaction processing.

If the customer is not a member (N in Act 6), the checkout processing unit 2004 executes normal checkout processing for a non-member (Act 16). The normal checkout processing for a non-member is a checkout processing not involving a price-cut or points granting. After the normal checkout processing for a non-member, the control unit 20 shifts to the processing in Act 15.

If a member ID is not input in Act 8 (N in Act 8), the determining unit 2005 determines whether a coupon ID is input to the input unit 2002 (Act 17). Specifically, the determining unit 2005 determines whether a barcode flag of a barcode recognized by the scanner 24 is 2.

If a coupon ID is input to the input unit 2002 (Y in Act 17), the control unit 20 returns to the processing in Act 8. In other words, if the coupon ID is input in a state in which the member ID input guidance screen is displayed on the display unit 22, the control unit 20 waits for an input of a member ID without performing special control. Since the member barcode and the coupon barcode can be displayed on the same screen in the display unit of the portable terminal as explained above, it easily occurs that a coupon ID can be scanned by mistake at a scan time of a member ID. In this case, if error display or the like is performed on the display unit 22 every time, the operator needs to perform an operation for error release and operations for the operator is complicated. Therefore, in this embodiment, if the coupon ID is input in the state in which the member ID input guidance screen is displayed, the error display or the like is not performed to achieve improvement of operability of the operator.

If a coupon ID is not input to the input unit 2002 (N in Act 17), the determining unit 2005 then determines whether a commodity code has been input to the input unit 2002 (Act 18). Specifically, the determining unit 2005 determines whether the barcode flag of the barcode recognized by the scanner 24 is 3. If a commodity code is not input to the input unit 2002 (N in Act 18), the control unit 20 returns to the processing in Act 8.

If a commodity code is input to the input unit 2002 (Y in Act 18), the display control unit 2006 causes the display unit 22 to display error information (Act 19). For example, the display unit 22 displays, as the error information, a message for urging an input of a member ID. The commodity code being input in this context means that the customer is bringing a commodity close to the scanner 24 and scanning a commodity barcode. In this case, since it is evident that the customer is performing the product scanning because of misunderstanding, the display control unit 2006 causes the display unit 22 to perform error display to urge the customer to perform the correct operation. The control unit 20 returns to the processing in Act 8.

If the member type is not found to be the specific member type in the processing in Act 11 (N in Act 11), the checkout processing unit 2004 determines that the customer is a member not using a coupon and executes the normal checkout processing for the member (Act 20). The normal checkout processing for the member can be checkout processing involving point granting. The POS terminal 2 does not display the coupon ID input guidance screen for a transaction of the customer without a coupon. Therefore, in this regard as well, it is possible to speed the operability for the operator. After the normal checkout processing for the member, the control unit 20 shifts to the processing in Act 15.

If a coupon ID is not input in the processing in Act 13 (N in Act 13), the determining unit 2005 next determines whether a member ID has been input to the input unit 2002 (Act 21).

If a member ID is input (Y in Act 21), the control unit 20 returns to the processing in Act 13. In other words, if the member ID is input with the coupon ID input guidance screen displayed on the display unit 22, the control unit 20 waits for an input of a coupon ID without performing any additional control. This is for the purpose of achieving improvement of the operability for the operator when a coupon ID is inadvertently input while the member ID input guidance screen is displayed on the display unit 22.

If a member ID is not input (N in Act 21), the determining unit 2005 next determines whether a commodity code has been input to the input unit 2002 (Act 22). If a commodity code was not input (N in Act 22), the control unit 20 shifts to the processing in Act 20. In this case, it is desirable to set a condition that information indicating that a coupon is not to be used has been input to the input unit 2002 from the operation unit 23. That is, it is desirable that the checkout processing unit 2004 executes the normal checkout processing for the member only after it is declared by the operator that a coupon is not to be used.

If a commodity code is input to the input unit 2002 (Y in Act 22), the display control unit 2006 causes the display unit 22 to display error information (Act 23). This is for the purpose of urging the customer to perform the correct operation as in the case when a commodity code is input in the state in which the member ID input guidance screen is displayed on the display unit 22. The control unit 20 returns to the processing in Act 13.

With the transaction processing according to the above, the POS terminal 2 can have improved the operability by displaying operation guidance or omitting the display of the operation guidance according to a member type of a customer.

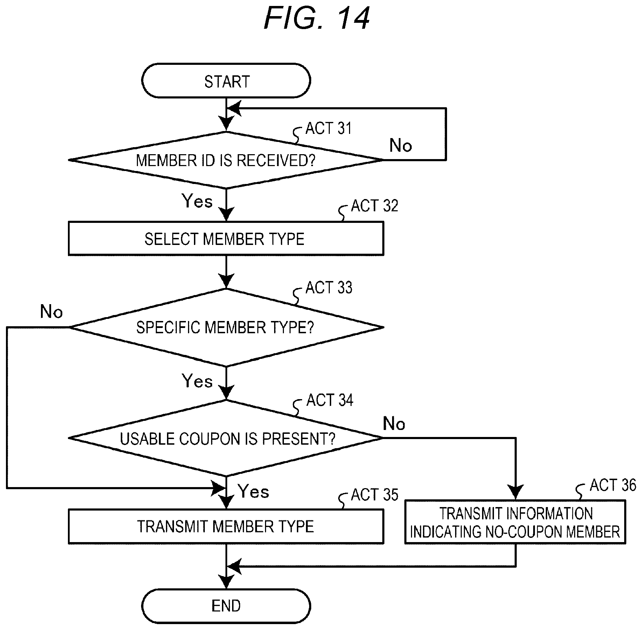

FIG. 14 is a flowchart illustrating the member type selection processing by the control unit 30 of the server device 3.

The control unit 30 determines whether the transmitting and receiving unit 3001 receives a member ID (Act 31) and, if the transmitting and receiving unit 3001 does not receive a member ID (N in Act 31), returns to the processing in Act 31 and stays on standby.

If the transmitting and receiving unit 3001 receives a member ID (Y in Act 31), the data managing unit 3003 selects a member type (Act 32). Specifically, the data managing unit 3003 refers to the member master 312 and reads out a member type corresponding to the member ID received by the transmitting and receiving unit 3001.

Subsequently, the control unit 30 determines whether the member type read out by the data managing unit 3003 is the specific member type, that is, the application member (Act 33). If the member type is the specific member type (Y in Act 33), the data managing unit 3003 determines whether the customer owns a usable coupon (Act 34). Specifically, the data managing unit 3003 refers to the coupon management file 313 and determines whether there is a coupon ID corresponding to the member ID received by the transmitting and receiving unit 3001, information indicating unuse being registered in a use flag of the coupon ID.

If a usable coupon is present (Y in Act 34), the transmitting and receiving unit 3001 transmits the member type to the POS terminal 2 (Act 35). In this case, the member type transmitted by the transmitting and receiving unit 3001 is the application member. The control unit 30 ends the member type selection processing.

If the member type of the customer is not the specific member type in the processing in Act 33 (N in Act 33), that is, if the customer is not the application member but is the card member, the control unit 30 skips the processing in Act 34 and shifts to the processing in Act 35. In this case, the member type transmitted by the transmitting and receiving unit 3001 in the processing in Act 35 is the card member.

If a usable coupon is absent in the processing in Act 34 (N in Act 34), the transmitting and receiving unit 3001 transmits information indicating that the customer is the no-coupon member to the POS terminal 2 (Act 36) . The control unit 30 ends the member type selection processing.

With the member type selection processing, the server device 3 can not only determine whether a member having the received member ID is the application member or the card member but also determine whether the member is the application member owning a coupon. In other words, the server device 3 can determine a member type of the member having the received member ID.

As explained above, the POS terminal 2 in an embodiment includes the checkout processing unit 2004 that executes checkout processing relating to a transaction of a commodity, the input unit 2002 to which a member ID for identifying a customer who performs the transaction is input, the transmitting and receiving unit 2001 that acquires a member type of the customer identified by the member ID input to the input unit 2002, and the display control unit 2006 that causes the display unit 22 to display a different screen according to the member type acquired by the transmitting and receiving unit 2001.

Consequently, the POS terminal 2 can display, on the display unit 22 a screen suitable to the member type of the customer who performs the transaction. Therefore, it is possible to facilitate operation of the operator who operates the POS terminal 2.

If the member type acquired by the transmitting and receiving unit 2001 is an application member to whom a coupon has been issued, the POS terminal 2 causes the display unit 22 to display the coupon ID input guidance screen for guiding an input of a coupon ID for identifying the coupon.

Consequently, in the case of a transaction of a customer who is a member type to whom a coupon has been issued, it is possible to check with the user whether to use the coupon. Therefore, it is possible to prevent the customer from forgetting to use a coupon. Use of coupons is promoted. The POS terminal 2 can simplify operation for the operator by not causing the display unit 22 to display the coupon ID input guidance screen for a customer who is a member type to whom a coupon has not been issued.

Further, the POS terminal 2 in an embodiment further includes the scanner 24 that reads, from a code symbol shown on a medium, any one of a member ID, a coupon ID, and a commodity code of a commodity to be purchased and outputs the member ID, the coupon ID, or the commodity code to the input unit 2002. If a coupon ID or a commodity ID is scanned by the scanner 24 in a state in which the display control unit 2006 causes the display unit 22 to display a screen for guiding an input of a member ID, the display control unit 2006 causes the display unit 22 to maintain the display of the screen.

Consequently, if a member ID and a coupon ID are displayed on one screen of a portable terminal of a customer at the same time the POS terminal 2 does not perform an error display or the like if a coupon ID is read. Therefore, the operator does not need to perform a releasing operation to clear the error display that could frequently occur when attempting to read a member ID and operability is improved.

In the POS terminal 2 in an embodiment, the display control unit 2006 causes the display unit 22 to display error information if a commodity code is scanned by the scanner 24 in the state in which the display control unit 2006 causes the display unit 22 to display the screen for guiding an input of a member ID.

Consequently, if different information is input when the member ID should be input, the POS terminal 2 performs error display or not depending on which type of code has been erroneous read. Therefore, the POS terminal 2 enables the operator to perform the correct operation without complicating operations more than necessary.

The POS terminal 2 in an embodiment further includes the scanner 24 that reads, from a code symbol shown on a medium, any one of a member ID, a coupon ID, and a commodity code of a commodity to be purchased and outputs the member ID, the coupon ID, or the commodity code to the input unit 2002. If a member ID or a commodity code is scanned by the scanner 24 in a state in which the display control unit 2006 causes the display unit 22 to display a screen for guiding an input of a coupon ID, the display control unit 2006 causes the display unit 22 to maintain the display of the screen.

Consequently, if a member ID and a coupon ID are displayed on one screen of a portable terminal of a customer, the POS terminal 2 does not perform error display or the like if the member ID is read before the coupon ID. Therefore, the operator does not need to perform a releasing operation of the error display since such an error could frequently occur and thus operability is improved.

In the POS terminal 2 in an embodiment, if a commodity code is scanned by the scanner 24 in a state in which the display control unit 2006 causes the display unit 22 to display a screen for guiding an input of a coupon ID, the display control unit 2006 causes the display unit 22 to display error information.

Consequently, if information other than a coupon ID is input when the coupon ID should be input, the POS terminal 2 performs error display or not depending on what type of information is read other than the coupon ID. Therefore, the POS terminal 2 enables the operator to perform the correct operation without complicating operations more than necessary.

In an embodiment, the control programs executed by the POS terminal 2 and the server device 3 may be provided by being recorded in a computer-readable recording medium such as a CD-ROM. The control programs executed by the devices may be stored on a computer connected to a network such as the Internet and may be provided by being downloaded through the network. Further, the control programs may be accessed through a network such as the Internet.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A checkout device, comprising:
a scanner (24) configured to read encoded information;
a card reader (26) configured to read information from a card medium; and
a processor configured to:
execute checkout processing for a commodity transaction of a customer;
receive customer identification information for identifying the customer;
acquire a member type for the customer based on the customer identification information; and
cause a display screen to display a different screen during the checkout processing according to the acquired member type.

2. The checkout device according to claim 1, wherein the processor causes the display screen to display a screen for guiding input of coupon identification information when the acquired member type for the customer indicates a coupon has been issued to the customer.

3. The checkout device according to claim 2, wherein, if customer identification information is read by the scanner while the screen for guiding input of the coupon identification information is displayed on the display screen, the display of the screen for guiding input of coupon identification information is maintained.

4. The checkout device according to claim 3, wherein, if commodity identification information is scanned by the scanner while the screen for guiding input of the coupon identification information is displayed on the display screen, error information is displayed on the display screen.

5. The checkout device according to any one of claims 1 to 4, wherein the processor causes the display screen to display a screen for guiding input of customer identification information.

6. The checkout device according to claim 5, wherein, if coupon identification information is read by the scanner while the screen for guiding input of the customer identification information is displayed on the display screen, the display of the screen for guiding input of customer identification information is maintained.

7. The checkout device according to claim 6, wherein, if commodity identification information is scanned by the scanner while the screen for guiding input of the customer identification information is displayed on the display screen, error information is displayed on the display screen.

8. A point-of-sale terminal, comprising:
a display screen for displaying information to an operator;
a barcode scanner for reading encoded information from a medium;
a card reader for reading information from a card medium; and
a processor configured to:
execute checkout processing for a commodity transaction of a customer;
receive customer identification information for identifying the customer;
acquire a member type for the customer based on the customer identification information; and
cause the display screen to display a different screen during the checkout processing according to the acquired member type.

9. The point-of-sale terminal according to claim 8, wherein the processor causes the display screen to display a screen for guiding input of coupon identification information when the acquired member type for the customer indicates a coupon has been issued to the customer.

10. The point-of-sale terminal according to claim 9, wherein, if customer identification information is read by the scanner while the screen for guiding input of the coupon identification information is displayed on the display screen, the display of the screen for guiding input of coupon identification information is maintained.

11. The point-of-sale terminal according to claim 10, wherein, if commodity identification information is scanned by the scanner while the screen for guiding input of the coupon identification information is displayed on the display screen, error information is displayed on the display screen.

12. The point-of-sale terminal according to any one of claims 8 to 11, wherein the processor causes the display screen to display a screen for guiding input of customer identification information.

13. The point-of-sale terminal according to claim 12, wherein, if coupon identification information is read by the scanner while the screen for guiding input of the customer identification information is displayed on the display screen, the display of the screen for guiding input of customer identification information is maintained.

14. The point-of-sale terminal according to claim 13, wherein, if commodity identification information is scanned by the scanner while the screen for guiding input of the customer identification information is displayed on the display screen, error information is displayed on the display screen.

15. A non-transitory, computer-readable medium storing program instructions which when executed by a processor of a checkout device causes the checkout device to perform a method comprising:
executing checkout processing for a commodity transaction of a customer;
receiving customer identification information for identifying the customer;
acquiring a member type for the customer based on the customer identification information; and
causing a display screen to display a different screen during the checkout processing according to the acquired member type.
